# EUROPÄISCHE PATENTSCHRIFT

(11) **EP 1 741 889 B1**
(45) Veröffentlichungstag und Bekanntmachung des Hinweises auf die Patenterteilung: **16.04.2008**
(21) Anmeldenummer: 06110031.9
(22) Anmeldetag: 16.02.2006
(51) Int. Cl.: F01N 3/20, F01N 3/34

(54) **Abgasbehandlungseinrichtung**
Exhaust treatment device
Dispositif de traitement de gaz d'échappement

(30) Priorität: 27.06.2005 DE 102005029835
(43) Veröffentlichungstag der Anmeldung: 10.01.2007
(73) Patentinhaber: ROBERT BOSCH GMBH, 70442 Stuttgart (DE)
(72) Erfinder: Woerz, Stefan, 71665 Vaihingen/Enz (DE); Genssle, Andreas, 70771 Musberg (DE); Fuchs, Christian, 70190 Stuttgart (DE)

(56) Entgegenhaltungen:
- DE-A1- 3 320 688
- DE-A1- 19 938 359
- GB-A- 995 835
- US-A- 5 738 184
- US-A1- 2003 159 663
- PATENT ABSTRACTS OF JAPAN Bd. 008, Nr. 249 (M-338), 15. November 1984 (1984-11-15) & JP 59 126016 A (ISUZU JIDOSHA KK), 20. Juli 1984 (1984-07-20)
- PATENT ABSTRACTS OF JAPAN Bd. 2003, Nr. 01, 14. Januar 2003 (2003-01-14) & JP 2002 256850 A (DENSO CORP), 11. September 2002 (2002-09-11)

## Beschreibung

Die Erfindung betrifft eine Abgasbehandlungseinrichtung gemäß dem Oberbegriff des Anspruchs 1 sowie ein Fahrzeug, insbesondere ein Kraftfahrzeug, gemäß dem Oberbegriff des Anspruchs 10.

Zukünftige gesetzliche Abgasemissionsvorschriften werden für Kraftfahrzeuge mit Dieselmotor deutlich geringere Emissionen von Stickoxiden fordern als dies gegenwärtig der Fall ist. Um diese Anforderungen zu erfüllen, wird voraussichtlich zumindest bei bestimmten Kraftfahrzeugklassen neben einer Verminderung der Rohemissionen des Motors auch eine weitere Abgasbehandlung erforderlich sein, bei der Stickoxide (NOₓ) in einem SCR(Selective Catalytic Reduction)-Katalysator mit Ammoniak (NH₃) oder einem anderen Reduktionsmittel umgesetzt werden, wobei sie mit hoher Selektivität zu Stickstoff (N₂) reduziert werden und dadurch ihr Anteil im Abgas stark verringert werden kann.

### Stand der Technik

Das zur Reduktion der Stickoxide im SCR-Katalysator benötigte Reduktionsmittel kann im Fall von Ammoniak entweder in Form einer Harnstoff-Wasser-Lösung in das Abgas eingedüst werden, was jedoch einen dem SCR-Katalysator vorgeschalteten HydrolyseKatalysator erforderlich macht, oder kann als gasförmiges Ammoniak in das Abgas vor dem SCR-Katalysator zugeführt werden. Da die Zufuhr von gasförmigem Ammoniak aus einer Gasflasche aus Sicherheitsgründen nicht erwünscht ist, werden zur Zeit Systeme entwickelt, mit deren Hilfe gasförmiges Ammoniak unter Einsatz von Kraftstoff und Luft oder Kraftstoff und Abgas vor Ort im Fahrzeug synthetisiert und anschließend in den Abgasstrom zugeführt werden kann. Derartige Systeme sind Beispiel in der DE 103 45808 A1, der DE 199 22 960 A1 und der DE 199 03 533 A1 beschrieben.

Um die Zufuhr von synthetisiertem gasförmigem Reduktionsmittel in den Abgastrakt vor dem SCR-Katalysator zu ermöglichen, muss innerhalb des zur Synthese verwendeten Systems oder einer zur Zufuhr in den Abgastrakt dienenden Zufuhreinrichtung ein Überdruck aufgebaut werden, mit dem der Abgasgegendruck an der Einmündung in den Abgastrakt und Strömungswiderstände des Systems bzw. der Zufuhreinrichtung überwunden werden können. Dazu kann zum Beispiel ein elektrischer Kompressor verwendet werden, dessen Strombedarf jedoch einen zusätzlichen Kraftstoffverbrauch bewirkt.

Aus der DE 199 38 359 ist es bekannt, bei einem Abgaskrümmer Sekundärluft über Venturi-Abschnitte zuzuführen.

### Vorteile der Erfindung

Die erfindungsgemäße Abgasbehandlungseinrichtung und das erfindungsgemäße Fahrzeug mit den im Anspruch 1 bzw. 9 genannten Merkmalen bieten demgegenüber den Vorteil, dass durch die Querschnittsverengung des Abgaskanals an der Einmündung der Zufuhreinrichtung nach dem Bernoulli-Prinzip ein Unterdruck erzeugt wird, der eine deutliche Reduzierung der für die Zufuhr des gasförmigen Reduktionsmittels in den Abgasstrom benötigten Kompressorleistung bzw. den Einsatz eines günstigeren und weniger Energie verbrauchenden Gebläses an Stelle des Kompressors gestattet. Dabei wird im vorteilhafter Weise das Druckgefälle in der Zufuhreinrichtung durch Veränderung des Strömungsquerschnitts des Abgaskanals im Bereich der Querschnittsverengung gesteuert.

Eine bevorzugte Ausgestaltung der Erfindung sieht vor, dass die Einmündung der Zufuhreinrichtung im Wesentlichen senkrecht zur Strömungsrichtung des Abgases durch die Querschnittsverengung des Abgaskanals ausgerichtet ist, wodurch hinter der Einmündung eine ausgezeichnete Vermischung des zugeführten Reduktionsmittels mit dem Abgas erzielt werden kann. Diese Vermischung kann durch eine Verzögerung des Abgasmassenstroms im Abgaskanal hinter der Querschnittsverengung durch eine dort vorgesehenen Erweiterung des Strömungsquerschnitts des Abgaskanals noch verbessert werden, so dass am Ende der Erweiterung und vor dem Eintritt in den SCR-Katalysator eine homogene Verteilung des Reduktionsmittels über den gesamten Strömungsquerschnitt gewährleistet werden kann. Somit wird der SCR-Katalysator für die anschließende Stickoxid-Reduktion sehr effizient vom Reduktionsmittel angeströmt und kann mit hohem Wirkungsgrad betrieben werden.

Grundsätzlich kann für die Strömungsquerschnitte im Abgaskanal vor der Querschnittsverengung und an der Querschnittsverengung ein festes Querschnittsverhältnis gewählt werden, zum Beispiel durch Auswahl geeigneter Leitungsdurchmesser. Ein solches statisches System funktioniert unabhängig vom jeweiligen Betriebspunkt der Verbrennungsmaschine, weil bei einer höheren Last und damit einer Erhöhung des Abgasmassenstroms durch den Abgaskanal zwar einerseits ein höherer Abgasgegendruck erzeugt wird, jedoch andererseits infolge der höheren Strömungsgeschwindigkeit im Bereich der Querschnittsverengung aber auch der Unterdruck an der Einmündung der Zufuhreinrichtung höher ist, so dass der höhere Abgasgegendruck durch das größere Druckgefälle in der Zufuhreinrichtung mindestens teilweise kompensiert wird.

Gemäß einer weiteren bevorzugten Ausgestaltung der Erfindung wird jedoch das Druckgefälle in der Zufuhreinrichtung durch gezielte Veränderung des Strömungsquerschnitts des Abgaskanals an der Querschnittsverengung gesteuert, wodurch die Möglichkeit besteht, unabhängig vom Abgasmassenstrom im Abgaskanal für ein konstantes Druckgefälle in der Reduktionsmittel-Zufuhreinrichtung zu sorgen, indem der Strömungsquerschnitt des Abgaskanals und damit die Strömungsgeschwindigkeit des Abgases im Bereich der Querschnittsverengung in Abhängigkeit vom Abgasmassenstrom durch den Abgaskanal verändert wird. Mit anderen Worten wird der Strömungsquerschnitt an der Querschnittsverengung bei steigendem Abgasmassenstrom vergrößert und bei abnehmendem Abgasmassenstrom verkleinert, wodurch eine Zunahme bzw. Abnahme der Strömungsgeschwindigkeit infolge der Vergrößerung bzw. Verkleinerung des Abgasmassenstroms durch eine Abnahme bzw. Zunahme der Strömungsgeschwindigkeit infolge der Querschnittsveränderung kompensiert und damit der erzeugte Unterdruck im Wesentlichen konstant gehalten wird. Auf diese Weise kann der Betrieb der Zufuhreinrichtung ohne weitere Hilfsmittel zeitgesteuert erfolgen und dadurch vereinfacht werden.

Darüber hinaus bewirkt die Anpassung des Strömungsquerschnitts der Querschnittsverengung an den Abgasmassenstrom und damit an die Motordrehzahl oder Motorlast eine deutliche Reduzierung des Abgasgegendrucks im Vergleich zu einem statischen System, wodurch der Kraftstoffverbrauch gesenkt werden kann.

Die Querschnittsveränderung erfolgt bevorzugt mit Hilfe eines an der engsten Stelle der Querschnittsverengung angeordneten beweglichen Drosselelements, dessen Bewegung entlang des Abgaskanals oder in den Abgaskanal hinein gesteuert oder durch den Abgasstrom selbst geregelt werden kann.

Während ein entlang des Abgaskanals bewegliches Drosselelement vorzugsweise ein verjüngtes Ende aufweist, das in axialer Richtung mehr oder weniger weit in die Querschnittsverengung einführbar ist, weisen radial in den Abgaskanal hinein bewegliche Drosselelemente besser einen Schieber oder Kolben auf. Weitere Varianten von beweglichen Drosselelementen sind ebenfalls denkbar, zum Beispiel ein Drehschieber oder eine mit dem Abgasdruck beaufschlagte Membran.

Die Stellung des Drosselelements wird vorzugsweise selbsttätig durch den Abgasdruck im Abgaskanal gesteuert, um an der engsten Stelle der Querschnittsverengung für einen gleichbleibenden Unterdruck und damit in der Zufuhreinrichtung für ein konstantes Druckgefälle zu sorgen.

Der Abgaskanal kann entweder vom gesamten, von der Verbrennungsmaschine erzeugten Abgas oder nur von einem Teil des Abgases der Verbrennungsmaschine durchströmt werden. Im zuletzt genannten Fall wird der Abgaskanal zweckmäßig von einer Nebenleitung gebildet, die zwischen ihrer Abzweigung von einer Hauptleitung und ihrer erneuten Einmündung in die Hauptleitung mit der Querschnittsverengung und mit der Einmündung der Reduktionsmittel-Zufuhreinrichtung versehen ist, wobei der Abgasmassenstrom durch die Nebenleitung zweckmäßig mit Hilfe einer Klappe steuerbar oder regelbar ist.

### Zeichnung

Die Erfindung wird nachfolgend in einem Ausführungsbeispiel anhand der zugehörigen Zeichnung näher erläutert. Es zeigen:
- Fig. 1: eine schematische Darstellung eines Abgastraktes eines Dieselmotors mit einer erfindungsgemäßen Abgasbehandlungseinrichtung;
- Fig. 2: eine schematische Darstellung einer Zufuhreinrichtung zum Zufuhren von gasförmigem Ammoniak in den Abgastrakt, die einen Teil der Abgasbehandlungseinrichtung bildet;
- Fig. 3a bis c: perspektivische Ansichten einer ersten Ausführungsform eines beweglichen Drosselelements der Zufuhreinrichtung;
- Fig. 4a bis c: perspektivische Ansichten einer zweiten Ausführungsform eines beweglichen Drosselelements der Zufuhreinrichtung;
- Fig. 5a bis c: eine Längsschnittansicht, eine Querschnittsansicht und eine perspektivische Ansicht einer dritten Ausführungsform eines beweglichen Drosselelements der Zufuhreinrichtung;
- Fig. 6a bis c: eine Längsschnittansicht, eine Querschnittsansicht und eine perspektivische Ansicht einer vierten Ausführungsform eines beweglichen Drosselelements der Zufuhreinrichtung;
- Fig. 7a bis c: eine Längsschnittansicht, eine Querschnittsansicht und eine perspektivische Ansicht einer fünften Ausführungsform eines beweglichen Drosselelements der Zufuhreinrichtung.

### Beschreibung der Ausführungsbeispiele

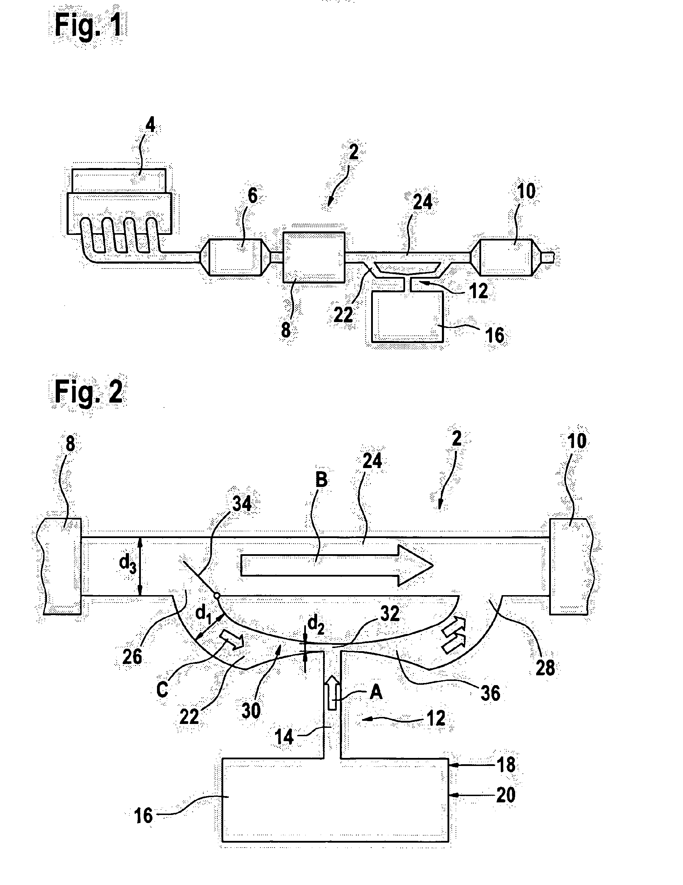

Der in Fig. 1 dargestellte Abgastrakt 2 eines Dieselmotors 4 eines Kraftfahrzeugs umfasst einen Oxidationskatalysator 6, einen hinter dem Oxidationskatalysator 6 im Abgasstrom angeordneten Dieselpartikelfilter 8, sowie einen SCR-Katalysator 10 und eine Zufuhreinrichtung 12 zur Zuführen von gasförmigem Ammoniak in den Abgastrakt 2 vor dem SCR-Katalysator 10, wobei die Zufuhreinrichtung 12 und der SCR-Katalysator 10 hinter dem Dieselpartikelfilter 8 angeordnet sind, um einen der Zufuhr des Ammoniaks entgegenwirkenden Abgasgegendruck so niedrig wie möglich zu halten.

Wie in Fig. 2 dargestellt, umfasst die Zufuhreinrichtung 12 eine Zufuhrleitung 14, durch die gasförmiges Ammoniak (Pfeil A in Fig. 2) aus einer an Bord des Kraftfahrzeugs mitgeführten Einrichtung 16 zur Synthetisierung von Ammoniak aus Kraftstoff 18 und Luft 20 oder aus Kraftstoff und Abgas in einen Abgaskanal 22 zugeführt wird. Dazu muss zwischen der Einrichtung 16 und der Einmündung der Zufuhrleitung 14 in den Abgaskanal 22 ein Druckgefälle aufgebaut werden, um den Abgasgegendruck im Abgaskanal 22 und die Strömungswiderstände in der Zufuhrleitung 14 zu überwinden. Dies kann zum Beispiel mit Hilfe eines Kompressors (nicht dargestellt) in der Zufuhrleitung 14 erfolgen.

Bei der in Fig. 1 und 2 dargestellten Zufuhreinrichtung 12 bildet der Abgaskanal 22 eine Nebenleitung mit kleinerem Querschnitt, die hinter dem Dieselpartikelfilter 8 von einer vom Hauptteil des Abgases (Pfeil B in Fig. 2) durchströmten Hauptabgasleitung 24 abzweigt, parallel zur Hauptabgasleitung 24 verläuft und vor dem SCR-Katalysator 10 wieder in die Hauptabgasleitung 24 einmündet.

Eine Zufuhr von gasförmigem Ammoniak oder einem anderen gasförmigen Reduktionsmittel direkt in den vom gesamten Abgas des Motors 4 durchströmten Abgastrakt 2 ist jedoch ebenfalls möglich.

Wie in Fig. 2 dargestellt, weist der Abgaskanal 22 zwischen seiner Abzweigung 26 von der Hauptabgasleitung 24 und seiner erneuten Einmündung 28 in die Hauptabgasleitung 24 eine allmähliche Querschnittsverengung 30, 32 auf, an deren engster Stelle 32 die Zufuhrleitung 14 in den Abgaskanal 22 mündet. Entlang der Querschnittsverengung 30, 32 erhöht sich die Strömungsgeschwindigkeit des durch den Abgaskanal 22 geführten Abgases (Pfeil C in Fig. 2) und wird an ihrer engsten Stelle 32 maximal, wobei nach dem Bernoulli-Prinzip der Druck des Abgases abnimmt und an der engsten Stelle 32 am kleinsten wird. Bei Simulationsrechnungen wurden in Abhängigkeit vom Abgasmassenstrom für den Druck des Abgases an der engsten Stelle 32 mit dem Durchmesser d₂ Werte zwischen etwa 70 und etwa 90 % des Abgasdrucks an einem stromaufwärtigen Messpunkt im Bereich eines unverengten Durchmessers d₁ ermittelt.

Dadurch wird an der engsten Stelle 32 der Abgasgegendruck, der einer Zufuhr des Ammoniakgases durch die Zufuhrleitung 14 in den Abgaskanal 22 entgegenwirkt, verkleinert, und die Zufuhr des Ammoniakgases mit einem geringeren Einsatz an elektrischer Energie für den Kompressor oder unter Verwendung eines preiswerteren Gebläses (nicht dargestellt) ermöglicht.

Die Beziehungen zwischen dem Querschnitt d₁ bzw. d₂ vor der Querschnittsverengung 30, 32 bzw. an deren engster Stelle 32 und dem Querschnitt d₃ im Abgastrakt 2 vor der Abzweigung 26 des Abgaskanals 22 sind so gewählt, dass einerseits der Abgasmassenstrom (Pfeil C) durch den Abgaskanal 22 zwar erheblich kleiner als der Abgasmassenstrom durch die Hauptabgasleitung 24 ist, jedoch größer als der Massenstrom des zugeführten Ammoniakgases (Pfeil A), und andererseits die an der engsten Stelle 32 auftretenden Abgasgeschwindigkeiten kleiner als die Schallgeschwindigkeit bleiben. Um diese Beziehung auch bei Veränderung des Abgasmassenstroms durch den Abgastrakt 2 aufrechtzuerhalten, zum Beispiel infolge einer größeren Last, ist an der Abzweigung 26 der Nebenleitung 22 eine Klappe 34 angeordnet, mit welcher der Abgasmassenstrom durch die Nebenleitung 22 verändert werden kann.

Wie in der Zeichnung dargestellt, ist die Einmündung der Zufuhrleitung 14 senkrecht zur Strömungsrichtung des Abgases durch die engste Stelle 32 der Querschnittsverengung 30, 32 ausgerichtet, so dass eine gute Durchmischung des Abgases und des zugeführten Ammoniakgases gewährleistet ist. Diese Durchmischung kann durch die anschließende Verzögerung des Abgasmassenstroms innerhalb einer an die engste Stelle 32 der Querschnittsverengung 30, 32 anschließenden allmählichen Querschnittserweiterung 36 vor der Einmündung 28 in die Hauptabgasleitung 24 noch verbessert werden.

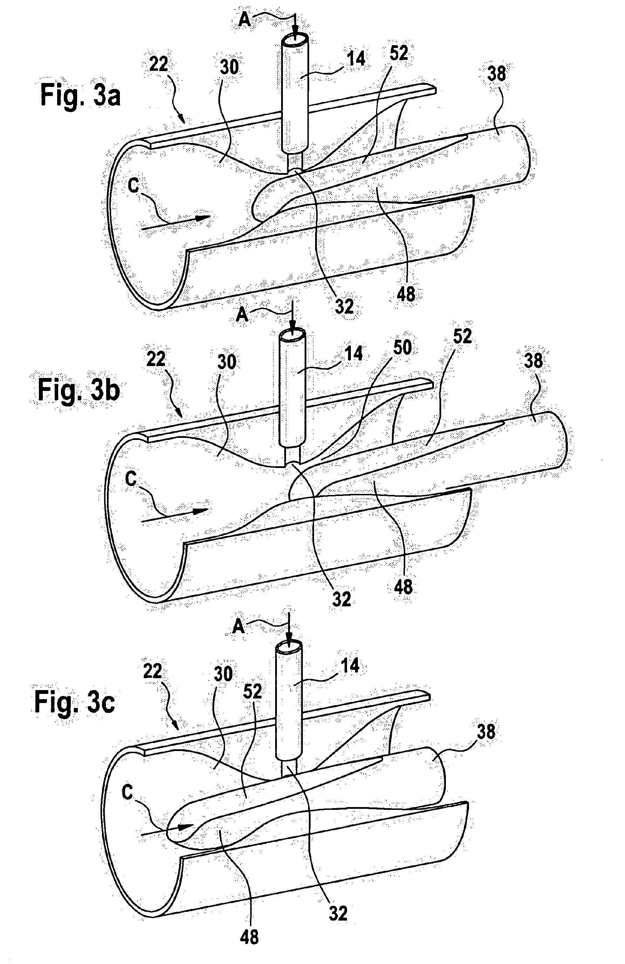

Um unabhängig vom Betriebszustand des Dieselmotors 4 und damit unabhängig von einem veränderlichen Abgasmassenstrom durch den Abgastrakt 2 eine konstante Strömungsgeschwindigkeit des Abgases an der engsten Stelle 32 der Querschnittsverengung 30, 32 zu erhalten, kann im Bereich der Querschnittsverengung 30, 32 ein bewegliches Drosselelement 38, 40, 42, 44, 46 vorgesehen sein, wie in den Figuren 3 bis 7 dargestellt.

Das in Fig. 3a bis c dargestellte stabförmig ausgebildete und mit einem verjüngten Stirnende 48 versehene Drosselelement 38 ist entgegen der Strömungsrichtung innerhalb des Abgaskanals 22 verschiebbar, wobei sich sein verjüngtes Stirnende 48 mehr oder weniger weit durch die Querschnittsverengung 30, 32 erstreckt, um den Querschnitt eines Ringspalts 50 zwischen dem Drosselelement 38 und der Wand des Abgaskanals 22 an der engsten Stelle 32 der Querschnittsverengung 30, 32 ausgehend von einer Ausgangsstellung (Fig. 3a) zu vergrößern (Fig. 3b) oder zu verkleinern (Fig. 3c). Um die Vermischung des von oben durch die Zufuhrleitung 14 zugeführten Ammoniakgases (Pfeil A) mit dem durch den Abgaskanal 22 strömenden Abgas (Pfeil C) zu verbessern, weist das Stirnende 48 des Drosselelements 38 eine in axialer Richtung verlaufende, der Einmündung der Zufuhrleitung 14 gegenüberliegende Hohlkehle 52 auf, deren Querschnitt in Strömungsrichtung des Abgases abnimmt.

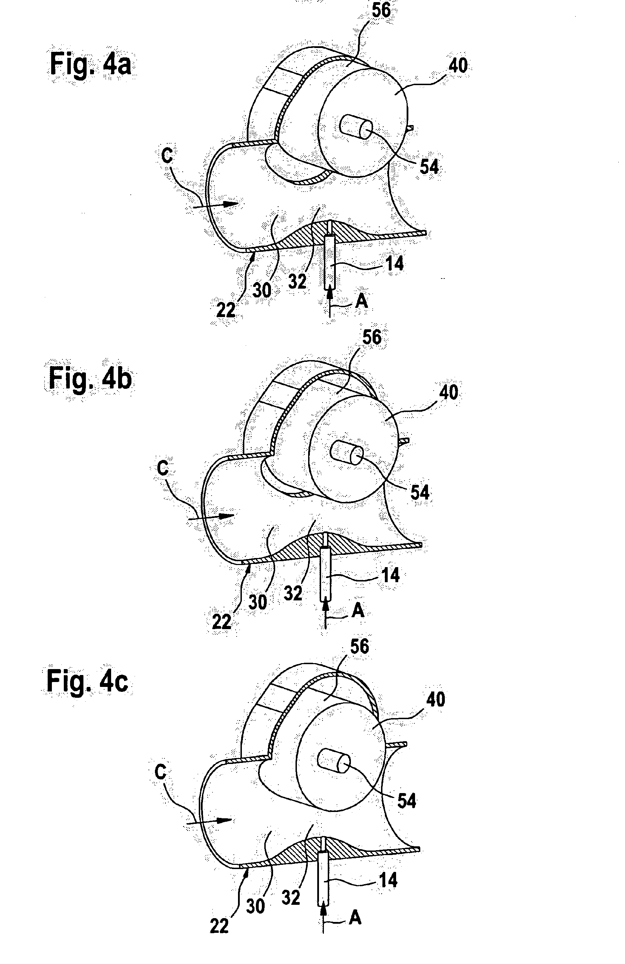

Das in Fig. 4a bis c dargestellte Drosselelement 40 ist als Drehschieber ausgebildet, dessen quer zur Strömungsrichtung des Abgases (Pfeil C) ausgerichtete Drehachse 54 exzentrisch zu seiner Umfangsfläche 56 angeordnet ist, so dass der Strömungsquerschnitt des Abgaskanals 22 ausgehend von einer Ausgangsstellung (Fig. 4b) durch Drehen des Drehschiebers 40 um seine Drehachse 54 vergrößert (Fig. 3a) oder verkleinert (Fig. 3c) werden kann. Die Einmündung der Zufuhrleitung 14 liegt der Umfangsfläche 56 des Drehschiebers 40 gegenüber.

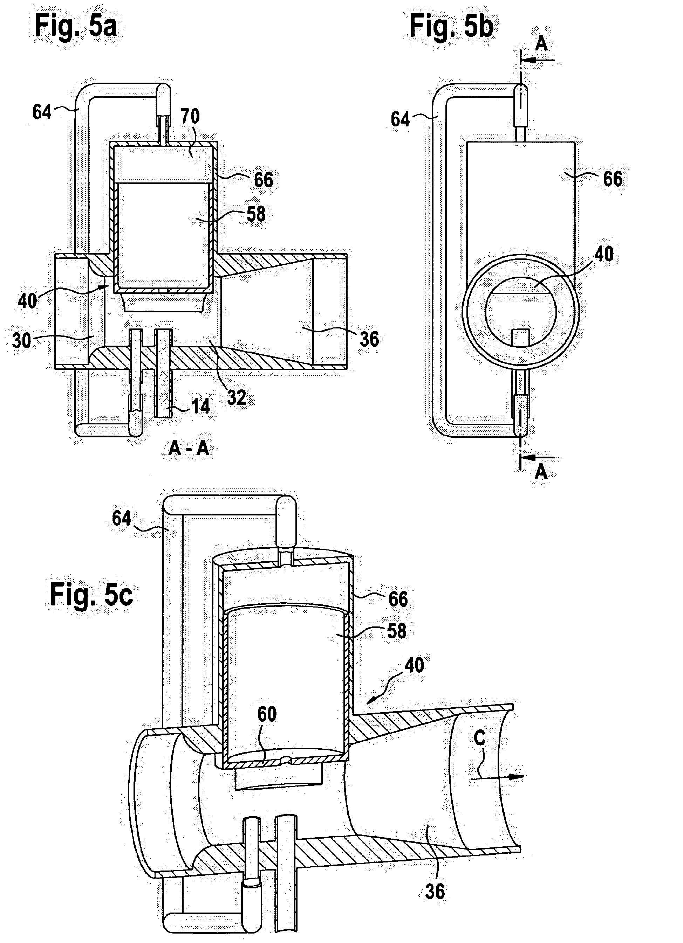

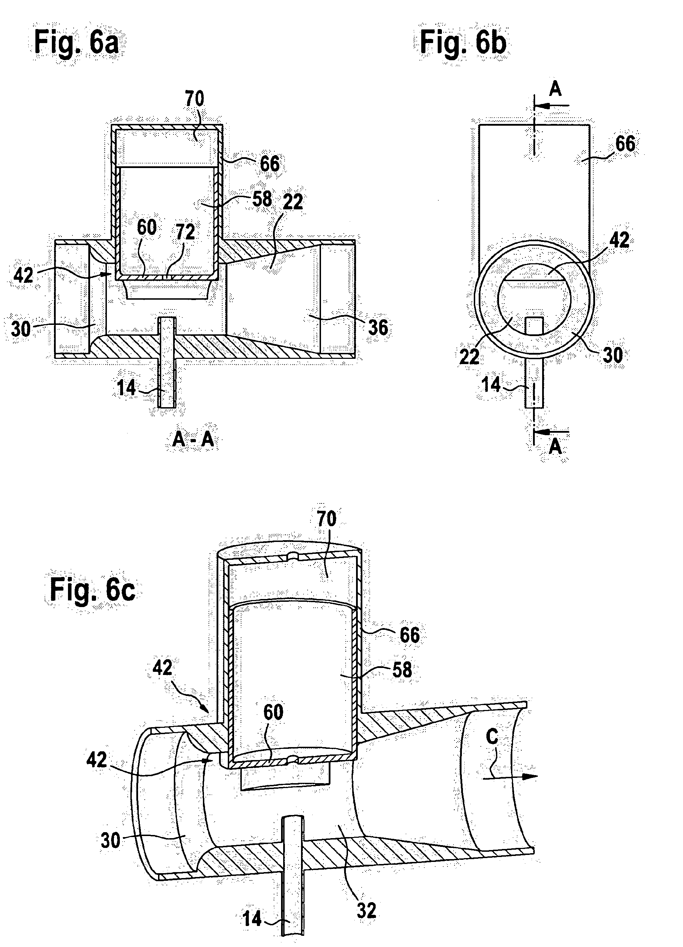

Die in den Figuren 5a bis c, 6a bis c und 7a bis c dargestellten Drosselelemente 40, 42, 44 umfasst jeweils einen zylindrischen Kolben 58, der im Bereich der engsten Stelle 32 der Querschnittsverengung 30, 32 quer zur Strömungsrichtung des Abgases (Pfeil C) auf die gegenüberliegende Einmündung der Zufuhrleitung 14 zu bzw. von dieser weg beweglich ist, wobei entweder sein geschlossenes Stirnende 60 (Fig. 5 und 6) oder ein über sein geschlossenes Stirnende 60 überstehendes Schieberelement 62 gegenüber von der Einmündung der Zufuhrleitung 14 in den Abgaskanal 22 ragt.

Wie in den Figuren 5, 6 und 7 dargestellt, ist es möglich, die Stellung des Kolbens 58 und damit der Strömungsquerschnitt an der engsten Stelle 32 der Querschnittsverengung 30, 32 in Abhängigkeit von dem an dieser Stelle im Abgaskanal herrschenden Abgasdruck selbsttätig zu regeln.

Bei der Ausführungsform in Fig. 5a bis c ist zu diesem Zweck eine Unterdruckleitung 64 mit einem integrierten 2/3 Wegeventil (nicht dargestellt) zwischen dem Abgaskanal 22 und einem den Kolben 58 umschließenden Zylinder 66 verbunden. Die Unterdruckleitung 64 mündet mit einem Ende an der engsten Stelle 32 der Querschnittsverengung 30, 32 in den Abgaskanal 22 und mit dem anderen Ende in einen vom Zylinder 66 umschlossenen Zylinderraum 70 auf der vom Abgaskanal 22 abgewandten Stirnseite des Kolbens 58. Wenn der Abgasmassenstrom durch den Abgaskanal 22 abnimmt und damit die Strömungsgeschwindigkeit des Abgases und der durch die Querschnittsverengung 30, 32 verursachte Unterdruck an der engsten Stelle 32 und damit auch im Zylinderraum 70 kleiner werden, bewegt sich der Kolben 58 durch sein Eigengewicht weiter in den Abgaskanal 22 hinein. Dies führt zu einer Erhöhung der Strömungsgeschwindigkeit an der engsten Stelle 32 und damit umgekehrt zu einer Erhöhung des Unterdrucks, so dass dieser letztere unabhängig vom jeweiligen Betriebspunkt des Dieselmotors 4 konstant gehalten werden kann. Ein konstanter Unterdruck an der engsten Stelle 32 der Querschnittsverengung 30, 32 wiederum führt zu einem konstanten Druckgefälle in der Zufuhrleitung 14, so dass die in den Abgaskanal 22 zugeführte Ammoniakgasmenge durch eine zeitabhängige Steuerung mit einfachen Mittel eingestellt werden kann.

Bei der Ausführungsform der Fig. 6a bis c wird die Verbindung zwischen dem Zylinderraum 70 auf der Oberseite des Kolbens 58 statt durch eine Unterdruckleitung durch eine Bohrung 72 mit kleinem Öffnungsquerschnitt hergestellt, die das an der engsten Stelle 32 der Querschnittsverengung 30, 32 in den Abgaskanal 22 ragende geschlossene unteren Stirnende 60 des Kolbens 58 durchsetzt. Bei einer Vergrößerung der Strömungsgeschwindigkeit und damit des Unterdrucks im Abgasrohr 22 wird sich dieser vergrößerte Unterdruck durch die Bohrung 72 auch im Inneren des Zylinders 66 aufbauen. Infolge des größeren Unterruck bewegt sich der Kolben 58 im Zylinder 66 nach oben, womit der Strömungsquerschnitt an der engsten Stelle 32 wieder vergrößert wird.

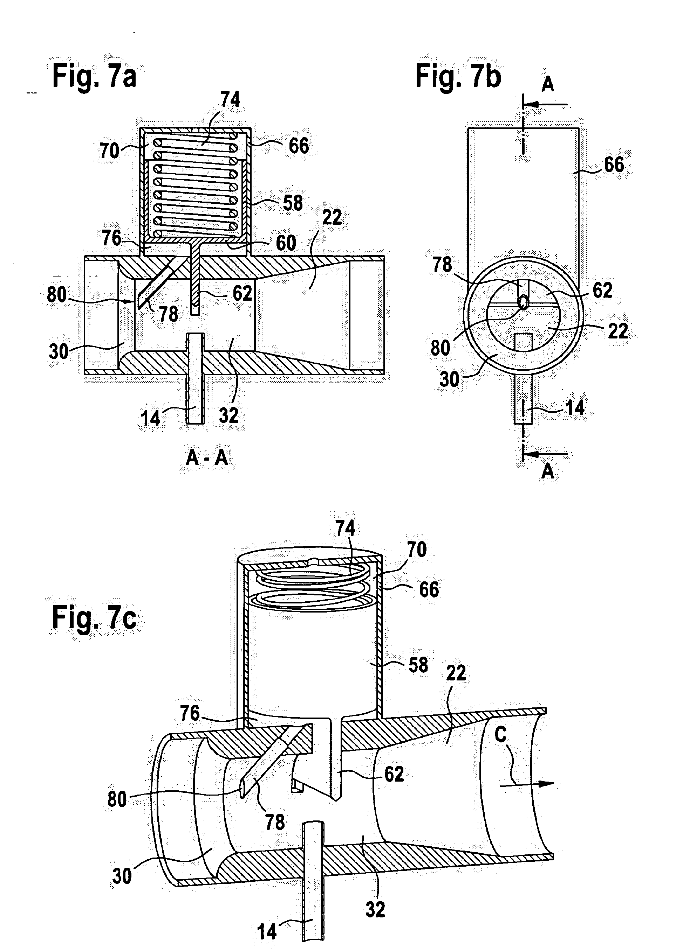

Bei der Ausführungsform der Fig. 7a bis c kommuniziert ein geschlossener Zylinderraum 76 unter dem unteren Stirnende 60 des Kolbens 58 mit dem Abgaskanal 22 durch eine Abgasleitung 78, die einen zur Strömungsrichtung im Abgaskanal 22 entgegengesetzten Einlass 80 aufweist, während der Kolben 58 von einer im Zylinderraum 70 angeordneten Schraubendruckfeder 74 nach unten in den Zylinderraum 76 gedrückt wird. Ein größerer Abgasmassenstrom im Abgaskanal 22 führt am Einlass 80 der Abgasleitung 78 zu einem höheren Staudruck, der durch die Abgasleitung in den Zylinderraum 70 übertragen wird und bewirkt, dass der Kolben 58 entgegen der Kraft der Feder 74 angehoben wird. Dadurch wird jedoch der Querschnitt d₂ an der engsten Stelle 32 des Abgaskanals 22 vergrößert, was wiederum zu einem Absinken der Strömungsgeschwindigkeit und damit zu einem Absinken des Staudrucks führt, so dass auch auf diese Weise ein im Wesentlichen konstanter Unterdruck im Bereich der Querschnittsverengung 30, 32 sichergestellt werden kann.

## Patentansprüche

1. Abgasbehandlungseinrichtung mit einem vom Abgas einer Verbrennungskraftmaschine durchströmten SCR-Katalysator, sowie einer Zufuhreinrichtung zum Zuführen eines gasförmigen Reduktionsmittels in das Abgas, die stromaufwärts vom SCR-Katalysator in einen vom Abgas durchströmten Abgaskanal mündet, **dadurch gekennzeichnet, dass** der Abgaskanal (22) an der Einmündung der Zufuhreinrichtung (12) eine Querschnittsverengung (30, 32) aufweist, wobei eine Einrichtung (38; 40; 42; 44; 46) zur Veränderung eines Strömungsquerschnitts des Abgaskanals (22) im Bereich der Querschnittsverengung (30, 32) vorgesehen ist.

2. Abgasbehandlungseinrichtung nach Anspruch 1, **dadurch gekennzeichnet, dass** die Einmündung der Zufuhreinrichtung (12) im Wesentlichen senkrecht zur Strömungsrichtung des Abgases durch die Querschnittsverengung (30, 32) des Abgaskanals (22) ausgerichtet ist.

3. Abgasbehandlungseinrichtung nach Anspruch 1 oder 2, **dadurch gekennzeichnet, dass** sich ein Strömungsquerschnitt des Abgaskanals (22) hinter der Einmündung der Zufuhreinrichtung (12) wieder erweitert.

4. Abgasbehandlungseinrichtung nach einem der vorhergehenden Ansprüche, **dadurch gekennzeichnet, dass** die Einrichtung (38; 40; 42; 44; 46) den Strömungsquerschnitt des Abgaskanals (22) im Bereich der Querschnittsverengung bei zunehmendem Abgasmassenstrom im Abgaskanal (22) vergrößert und bei abnehmendem Abgasmassenstrom im Abgaskanal (22) verkleinert.

5. Abgasbehandlungseinrichtung nach einem der vorhergehenden Ansprüche, **dadurch gekennzeichnet, dass** die Einrichtung ein in den Abgaskanal (22) ragendes Drosselelement (38; 40; 42; 44; 46) umfasst.

6. Abgasbehandlungseinrichtung nach Anspruch 5, **gekennzeichnet durch** eine Einrichtung (64; 72; 76, 78) zur Regelung der Position des Drosselelements (38; 40; 42; 44; 46) in Abhängigkeit vom Abgasdruck an der engsten Stelle (32) der Querschnittsverengung (30, 32).

7. Abgasbehandlungseinrichtung nach einem der vorangehenden Ansprüche, **dadurch gekennzeichnet, dass** der Abgaskanal (22) vor der Querschnittsverengung (30, 32) von einer Hauptabgasleitung (24) abzweigt und hinter der Querschnittsverengung (30, 32) wieder in die Hauptabgasleitung (24) mündet.

8. Abgasbehandlungseinrichtung nach Anspruch 7, **gekennzeichnet durch** eine Regeleinrichtung (34) zur Regelung der Abgasmassenströme **durch** den Abgaskanal (22) und die Hauptabgasleitung (24).

9. Fahrzeug, insbesondere Kraftfahrzeug, **gekennzeichnet durch** eine Abgasbehandlungseinrichtung nach einem der vorangehenden Ansprüche.

10. Fahrzeug nach Anspruch 9, **dadurch gekennzeichnet, dass** die Einmündung der Zufuhreinrichtung (14) in den Abgaskanal (22) stromabwärts von einem Oxidationskatalysator (6) und einem Dieselpartikelfilter (8) angeordnet ist.

## Claims

1. Exhaust gas treatment device having an SCR catalytic converter which is traversed by the exhaust gas of an internal combustion engine, and having a supply device for supplying a gaseous reducing agent into the exhaust gas, which supply device opens out upstream of the SCR catalytic converter into an exhaust duct which is traversed by the exhaust gas, **characterized in that** the exhaust duct (22) has a cross-sectional constriction (30, 32) at the opening-out point of the supply device (12), with a device (38; 40; 42; 44; 46) for varying a flow cross section of the exhaust duct (22) being provided in the region of the cross-sectional constriction (30, 32).

2. Exhaust gas treatment device according to Claim 1, **characterized in that** the opening-out point of the supply device (12) is aligned substantially perpendicular to the flow direction of the exhaust gas through the cross-sectional constriction (30, 32) of the exhaust duct (22).

3. Exhaust gas treatment device according to Claim 1 or 2, **characterized in that** a flow cross section of the exhaust duct (22) widens again downstream of the opening-out point of the supply device (12).

4. Exhaust gas treatment device according to one of the preceding claims, **characterized in that** the device (38; 40; 42; 44; 46) increases the flow cross section of the exhaust duct (22) in the region of the cross-sectional constriction with increasing exhaust gas mass flow rate in the exhaust duct (22), and decreases the flow cross section of the exhaust duct (22) in the region of the cross-sectional constriction with decreasing exhaust gas mass flow rate in the exhaust duct (22).

5. Exhaust gas treatment device according to one of the preceding claims, **characterized in that** the device comprises a throttle element (38; 40; 42; 44; 46) which projects into the exhaust duct (22).

6. Exhaust gas treatment device according to Claim 5, **characterized by** a device (64; 72; 76; 78) for regulating the position of the throttle element (38; 40; 42; 44; 46) as a function of the exhaust gas pressure at the narrowest point (32) of the cross-sectional constriction (30, 32).

7. Exhaust gas treatment device according to one of the preceding claims, **characterized in that** the exhaust duct (22) branches off from a main exhaust line (24) upstream of the cross-sectional constriction (30, 32) and opens out into the main exhaust line (24) again downstream of the cross-sectional constriction (30, 32).

8. Exhaust gas treatment device according to Claim 7, **characterized by** a regulating device (34) for regulating the exhaust gas mass flow rates through the exhaust duct (22) and the main exhaust line (24).

9. Vehicle, in particular motor vehicle, **characterized by** an exhaust gas treatment device according to one of the preceding claims.

10. Vehicle according to Claim 9, **characterized in that** the opening-out point of the supply device (14) into the exhaust duct (22) is arranged downstream of an oxidation catalytic converter (6) and a diesel particulate filter (8).

## Revendications

1. Installation de traitement des gaz d'échappement comprenant un catalyseur SCR traversé par les gaz d'échappement d'un moteur à combustion interne ainsi qu'une installation d'alimentation pour fournir un agent réducteur à l'état gazeux aux gaz d'échappement, débouchant en aval du catalyseur SCR dans un canal de gaz d'échappement traversé par les gaz d'échappement,
**caractérisée en ce que**
le canal de gaz d'échappement (22) présente une réduction de section (30, 32) à l'embouchure de l'installation d'alimentation (12),
une installation (38 ; 40 ; 42 ; 44 ; 46) étant prévue pour modifier la section de passage du canal des gaz d'échappement (22) dans la zone de la réduction de section (30, 32).

2. Installation de traitement de gaz d'échappement selon la revendication 1,
**caractérisée en ce que**
l'embouchure de l'installation d'alimentation (12) est alignée pratiquement perpendiculairement à la direction de passage des gaz d'échappement à travers la réduction de section (30, 32) du canal de gaz d'échappement (22).

3. Installation de traitement de gaz d'échappement selon les revendications 1 ou 2,
**caractérisée en ce que**
la section de passage du canal de gaz d'échappement (22) s'élargit de nouveau en aval de l'embouchure de l'installation d'alimentation (12).

4. Installation de traitement de gaz d'échappement selon l'une des revendications précédentes,
**caractérisée en ce que**
l'installation (38 ; 40 ; 42 ; 44 ; 46) augmente la section de passage du canal de gaz d'échappement (22) dans la zone de la réduction de section lorsque le débit massique des gaz d'échappement augmente dans le canal de gaz d'échappement (22) et elle réduit cette section lorsque le débit massique des gaz d'échappement diminue dans le canal des gaz d'échappement (22).

5. Installation de traitement de gaz d'échappement selon l'une des revendications précédentes,
**caractérisée en ce que**
l'installation comprend un élément d'étranglement (38, 40, 42, 44, 46) pénétrant dans le canal des gaz d'échappement (22).

6. Installation de traitement de gaz d'échappement selon la revendication 5,
**caractérisée par**
une installation (64 ; 72 ; 76 ; 78) pour réguler la position de l'élément d'étranglement (38 ; 40 ; 42 ; 44 ; 46) en fonction de la pression des gaz d'échappement au point le plus étroit (32) de la réduction de section (30, 32).

7. Installation de traitement de gaz d'échappement selon l'une des revendications précédentes,
**caractérisée en ce que**
le canal des gaz d'échappement (22) dérive d'une conduite principale de gaz d'échappement (24) en amont de la réduction de section (30, 32) et débouche de nouveau dans la conduite principale de gaz d'échappement (24) en aval de la réduction de section (30, 32).

8. Installation de traitement de gaz d'échappement selon la revendications 7,
**caractérisée par**
une installation de régulation (34) pour réguler les débits massiques de gaz d'échappement à travers le canal de gaz d'échappement (22) et la conduite principale de gaz d'échappement (24).

9. Véhicule, notamment véhicule automobile,
**caractérisé par**
une installation de traitement des gaz d'échappement selon l'une des revendications précédentes.

10. Véhicule, notamment véhicule automobile selon la revendication 9,
**caractérisé en ce que**
l'embouchure de l'installation d'alimentation (14) dans le canal des gaz d'échappement (22) se situe en aval d'un catalyseur d'oxydation (6) et d'un filtre à particules diesel (8).
